# EUROPEAN PATENT APPLICATION

(11) **EP 1 772 991 A1**
(43) Date of publication of application: **11.04.2007**
(21) Application number: 05292096.4
(22) Date of filing: 07.10.2005
(51) Int. Cl.: H04L 12/18

(54) **Multicast group registration information in a telecommunication network**

(71) Applicant: Alcatel Lucent, 75008 Paris (FR)
(72) Inventor: Addeo, Christian, 33170 Pordenone (IT); Busi, Italo, 20023 Cerro Maggiore (Milano) (IT)
(74) Representative: Menzietti, Domenico

(57) **Abstract**

A method is described for transmission (IGMP area) of a first information indicating a multicast group from a network element (H1) of the multicast group to a multicast network element (R4). The method includes the steps of transmitting (IGMP area) the first information over a layer from the network element towards the multicast network element, receiving and reading (IGMP snooping area) the first information, converting (S9_enh, S13_enh) the first information to a second information and transmitting (GMRP area) towards the multicast network element the second information over another layer. For example, the first information can be transmitted by IGMP messages over the IP layer and the second information can be transmitted by GMRP messages over the Ethernet layer.

## Description

### FIELD OF THE INVENTION

The present invention relates to the telecommunication field and more in particular to a method for performing registration to a multicast group. Still more in particular, the invention concerns a method for transmission in a telecommunication network of a multicast group information according to a multicast protocol, wherein the multicast group information crosses a sub-network not supporting the multicast protocol.

### BACKGROUND OF THE INVENTION

Transmission of multicast data traffic consists in the transmission of the same data traffic from a source network element to multiple destination network elements, crossing a telecommunication network; the destination network elements define a multicast group.

Nowadays multicast applications are widely used when requiring multi-users and include for example video/ audio conferences, cable television, network games; these applications can require a pre-defined quality of service (for example real-time) and dynamic multicast group (that is the number and location of destination network elements can change).

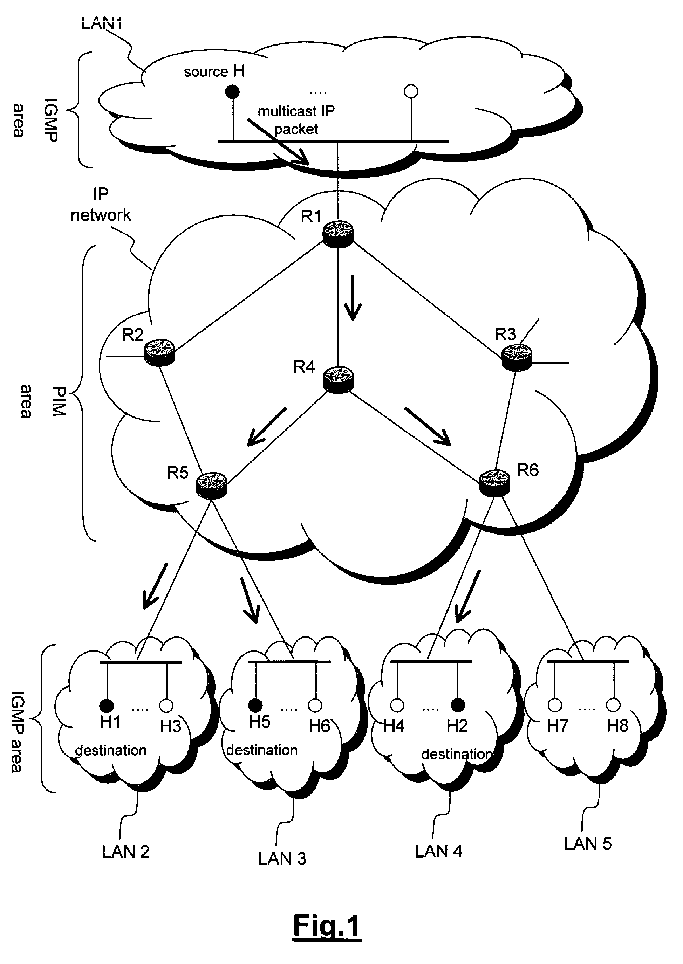

Internet Protocol (IP) is a layer-3 protocol in the ISO/OSI stack and it is widely deployed in a packed-switched network. Fig.1 shows a multicast group including a source network element H (usually indicated with host) belonging to a Local Area Network (LAN1) and three destination network elements (hosts H1, H2, H5) belonging to other Local Area Networks (LAN2, LAN3, LAN4), wherein multicast group data traffic (a multicast IP packet in this example of packet-switched network) is indicated with arrows and it's transmitted from the source host H to the three destination hosts H1, H2, H5 crossing an IP network, which includes network elements commonly indicated with routers (R1, R2, R3, R4, R5, R6); H1, H2 and H5 belong to the same multicast group and this is indicated in Fig.1 with a black filled circle, while H3, H4, H6, H7 and H8 don't belong to any multicast group and this is indicated in Fig.1 with a white filled circle. A destination network element can be for example a personal computer in case of requesting a network game, a television in case of requesting a video or it can be a telephone in case of requesting an audio or video conference.

In this network scenario, replicating the packets at the source host and transmitting the replicated packets from the source host to the destination hosts over different routes increases the data traffic and can result in network congestion and loss of Quality of Service. Referring to Fig.1, the multicast packet is replicated at H into three equal packets: for example, the first packet is transmitted from H to H1 crossing R1, R2, R5, the second packet from H to H5 crossing R1, R4, R5 and the third packet from H to H2 crossing R1, R3, R6.

A more efficient solution is to identify a multicast router, to transmit one packet from the source host to the multicast router and to replicate the packet to multiple packets only over the routes towards the destination hosts. This is indicated in Fig.1, wherein the multicast router is R4, which forwards the multicast packets only to R4 output ports over the routes towards the destination hosts which belong to the multicast group; this process is usually indicated with "pruning" of the multicast traffic. More specifically, the multicast packet is transmitted from H and crosses R1, which forwards the multicast packet only to R4, wherein it is replicated into two multicast packets and transmitted to R5 and R6, because these are the routes required to reach H1, H2 and H5. The multicast packet received by R5 is again replicated into two packets and transmitted to LAN2 and LAN3 to reach H1 and H5 respectively, while the multicast packet received by R6 is transmitted only to LAN4 to reach H2. Compared to the previous solution, less network resources (that is less links between routers and less crossed routers) are used.

Multicast routing protocols running over the IP layer allow efficient replication of the multicast packets as indicated above and also allows dynamic registration of multicast groups. These protocols are divided into:
- multicast routing protocols between the hosts belonging to the LAN and the router connecting the LAN to the IP network, like Internet Group Management Protocol (IGMP, issued by IETF in RFC1122-10/1989 for version 1, RFC2236- 11/1997 for version 2 and RFC3376- 10/2002 for version 3), Multicast Listener Discovery (MLD, defined in RFC2710-10/1999) and Multicast Open Shortest Path First (MOSPF,defined in RFC1584- 3/1994);
- multicast routing protocols between the routers of the IP network, like Protocol Independent Multicast (PIM, defined in RFC1812- 6/2005, RFC2362- 6/1998, RFC3973- 1/2005), Distance Vector Multicast Routing Protocol (DVMRP, defined in RFC1075 11/1998), Multicast Border Gateway Protocol (MBGP, defined in RFC2858 6/2000).

The different types of multicast routing protocols are indicated in Fig.1, wherein the IGMP area performs multicast group registration according to IGMP and PIM area peforms multicast group registration according to PIM. According to IGMP, the router connecting the LAN to the IP network, that is router R5 for LAN2 and LAN3 and router R6 for LAN4 and LAN5, periodically checks all the required multicast groups by transmitting from the ports connected to the LAN Query messages to the hosts; in case of defining Virtual LANs each one having an identifier (VLAN), the router transmits the Query messages from the ports connected to the LAN configured for each VLAN. The Query message is received by hosts H1...H7 of LAN2...LAN5; each host receiving the Query message and interested to belong to a multicast group, that is hosts H1 for LAN2, H5 for LAN3 and H2 for LAN4, answers transmitting a Report message for indicating to belong to a specific multicast group, that is a request to receive multicast packets; the Report message includes a Group Address field (also called GDA= Group Destination Address) carrying a multicast IP address indicating the specific multicast group. Therefore R5 receives the Report message transmitted by H1 and H5, while R6 receives the Report message transmitted by H2; the Report messages received by R5 and R6 includes the same multicast IP address because H1, H2 and H5 belong to the same multicast group. The multicast IP address is a class D IP address, in the range between 224.0.0.1 and 239.255.255.255. When R5 receives from a port (and optionally, from a couple <port,VLAN>) connected to LAN2 the Report message transmitted by H1, it stores an identifier of the port (and optionally, it stores the couple <port identifier, VLAN identifier>) receiving the Report message and it stores the multicast IP address carryed by the received Report message: this is required for forwarding from R5 to the stored port identifier the received multicast IP packets addressed to the multicast group identified by the stored multicast IP address, that is in Fig.1 for forwarding the multicast IP packet to LAN2 including H1. The same method is performed by:
- R5 for forwarding the multicast IP packet to LAN3 including H5, by storing identifier of the port connected to LAN3 and the corresponding multicast IP address;
- R6 for forwarding the multicast IP packet only to LAN4 including H2, by storing identifier of the port connected to LAN4 and the corresponding multicast IP address.

On the contrary, if routers R5 and R6 don't receive any Report message from a port (and optionally, from a couple <port, VLAN>) for a specific multicast group, this means that no host (for example, hosts H3, H4, H6, H7, H8) is interested to receive multicast packets from said port for said specific multicast group and thus it stops to forward to said port the received multicast packets addressed to said multicast group .
IGMP version 2 also defines a Leave message transmitted from a destination host for indicating to leave a specific multicast group and a Query message addressed to a specific multicast group.

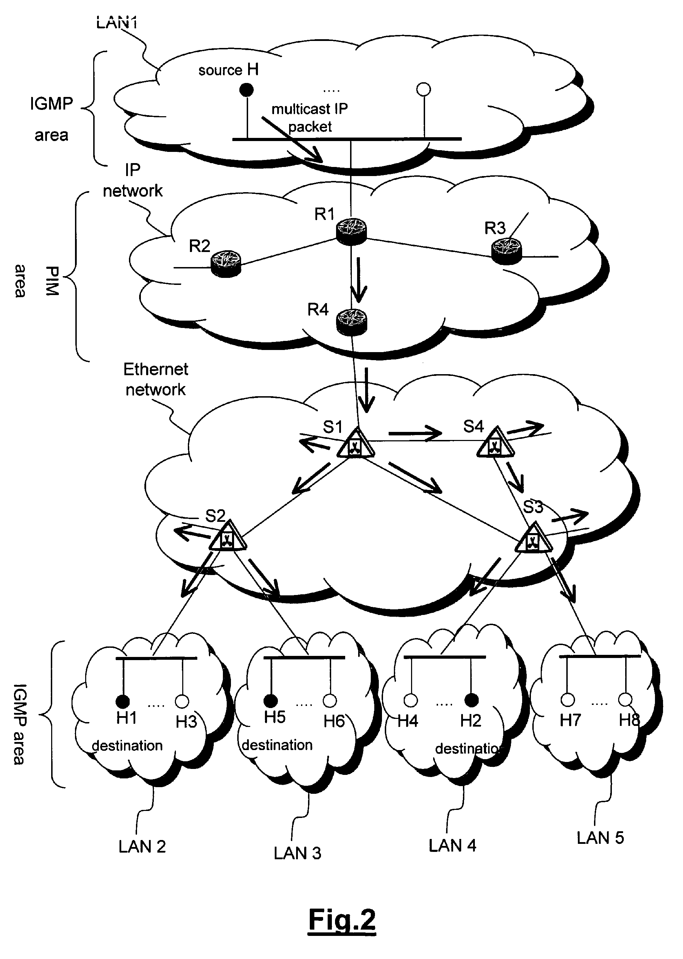

Nowadays a telecommunication network includes not only a backbone network composed of routers supporting the IP protocol (as explained above), but also includes a metropolitan area network (MAN) composed of network elements defined switches, supporting a layer-2 protocol like Ethernet or ATM; this is indicated in Fig.2, wherein some routers (R5 and R6) are replaced by an Ethernet network. A multicast packet is transmitted from H to H1, H2 and H5 and crosses not only the IP network but also the Ethernet network. The reason of a layer-2 Ethernet network including Ethernet switches is that it is less expensive than a layer-3 IP network including IP routers and thus the trend is to extend the network supporting Ethernet protocol from a Local area to Metropolitan area, that is a broader geographical area supporting the Ethernet protocol. In the case of ATM, the reason is that ATM networks are widely deployed because can guarantee a pre-defined quality of service; ATM is more common when the hosts require to access the network through the Digital Subscriber Line (DSL) protocol, according to the different implementation (ADSL, VDSL, VDSL2).

In this network scenario, wherein the network connecting the source to the destination hosts includes both a layer-3 (IP) network and a layer-2 (Ethernet) network, the IGMP protocol can not allow the multicast group registration in the layer-2 network and thus the pruning of the multicast IP packets. In fact the switches of the Ethernet network (layer-2) can not elaborate the IGMP Report messages transmitted by the destination hosts over the IP layer (layer-3); therefore the switches manage the multicast IP packets received by the IP network as broadcast packets (as defined by IEEE 802.1 D), that is the switches forward the multicast packets received from one port to all the other ports, thus increasing in the Ethernet network the data traffic and overloading processing units of the switches; this is shown in Fig.2, wherein the multicast packet received by S1 from R4 is forwarded not only to S2 and S3 but also to S4 (which is not part of any route to hosts belonging to the multicast group) and the multicast packet is forwarded by S3 not only to LAN4 (which includes H2 belonging to the multicast group) but also to LAN5 (which does not include any host belonging to the multicast group).

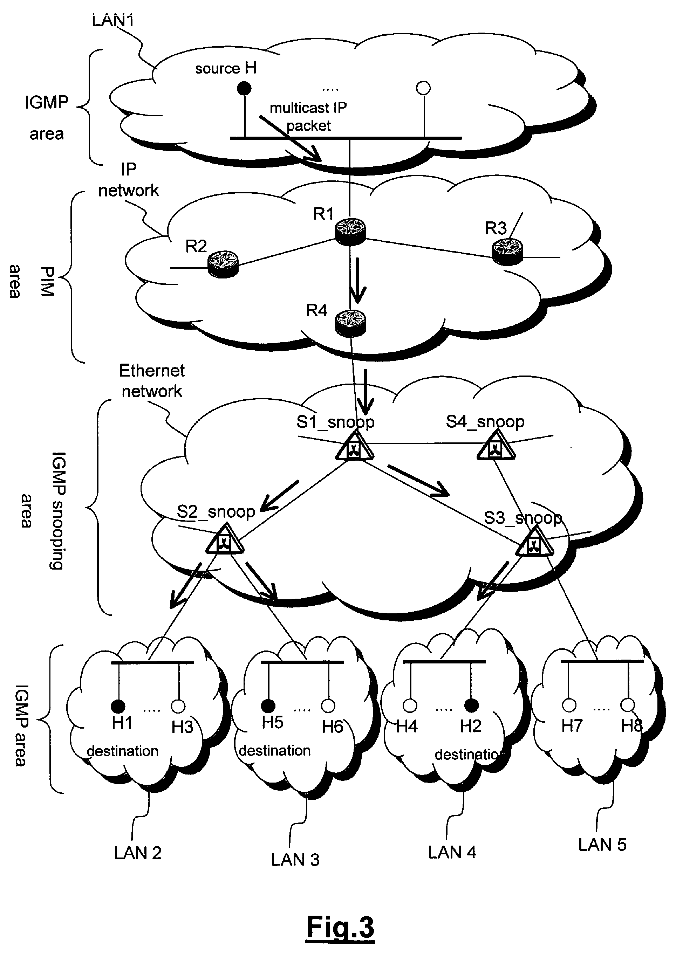

The above problem is solved by the IGMP "snooping" functionality, defined by draft-ietf-magma-snoop-12.txt (2/2005), issued by IETF and updated periodically. This functionality defines that an Ethernet switch supporting the IGMP snooping can listen the IGMP messages between hosts and routers (R4 in Fig.3) connecting the IP network to the Ethernet network; therefore it is required to activate the IGMP snooping functionality at each switch of the Ethernet network (and optionally, for each VLAN requiring the multicast feature) as indicated in Fig.3, wherein switches S1_snoop, S2_snoop, S3_snoop, S4_snoop replace switches S1, S2, S3, S4 of Fig.2 respectively and indicate activation of the IGMP snooping functionality. More specifically, an IGMP snooping switch can read the IGMP Report messages transmitted from destination hosts H1, H2, H5 to router R4 connecting the IP network to the Ethernet network and learns (or is configured with) the ports on which the hosts are reachable and also learns the multicast IP address which the destination host is requesting to belong; this information is stored into the IGMP snooping switch, so that a multicast packet received by an IGMP snooping switch is forwarded only to ports on which the destination hosts are reachable. This is shown in Fig.3, wherein S1_snoop forwards the multicast packets to S2_snoop and S3_snoop and not to S4_snoop and wherein S3_snoop forwards the multicast packets to LAN4 (including H2 belonging to the multicast group) and not to LAN5 (not including any host belonging to the multicast group).

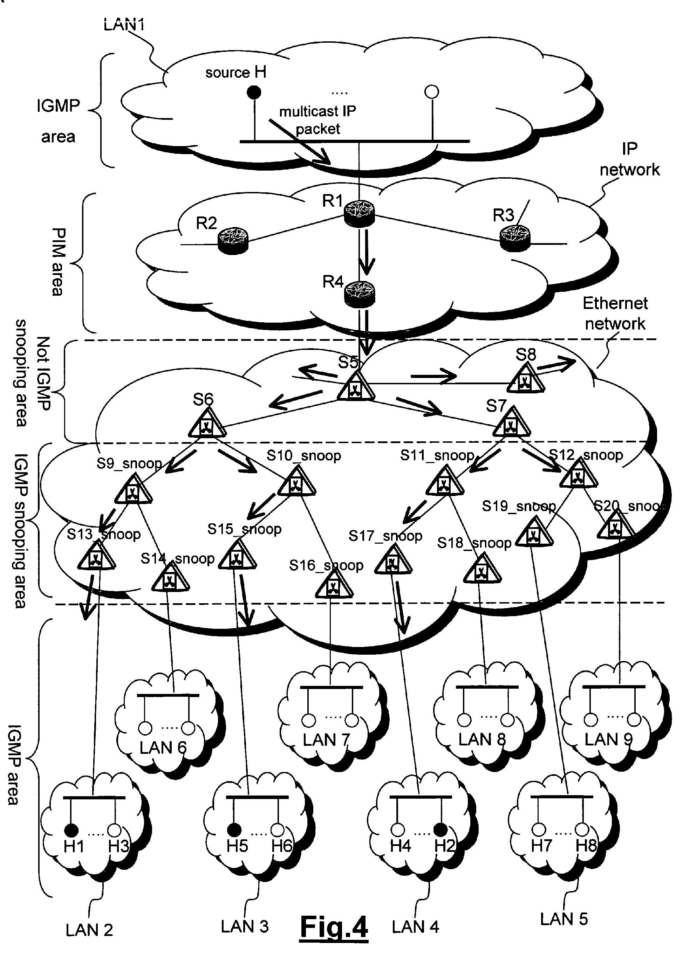

Usage of the IGMP snooping has the disadvantage to require activation of this functionality at each switch (and optionally, for each VLAN requiring the multicast feature) of the Ethernet network (it is not active by default) and this is expensive; this is usually indicated with Operational Expenditure (Opex), that is the costs required for configuration of a telecommunication network, compared to the Capital Expenditure (Capex), that is the costs of the network elements. In fact the Ethernet network can include a lot of switches and thus a lot of them must be configured during set up, increasing the probability of configuration errors; moreover, a correlated disadvantage is that it's possible only a manual configuration of each switch, because IGMP snooping is not a standard and no automatic configuration is possible in case of Ethernet switches belonging to different vendors. A further disadvantage is that it's possible that not all the switches of an Ethernet network can support the IGMP snooping functionality, because it is not a standard or because the switches can belong to different vendors. This is shown in Fig.4, wherein the Ethernet network is divided into two sub-networks, one (indicated with "IGMP snooping area") supporting IGMP snooping (including S9_snoop, S10_snoop, ...., S20_snoop) and another (indicated with "not IGMP snooping area") not supporting the IGMP snooping (including S5, S6, S7, S8). Fig.4 shows an Ethernet network including a greater number of switches (16), compared to Fig.2 and Fig.3 including less switches (4); this is required to explain better the invention. In this network scenario, the IGMP protocol and IGMP snooping functionality can not allow the multicast group registration in the layer-2 network and thus the pruning of the multicast traffic. In fact the switches of the sub-network not supporting the IGMP snooping functionality can not elaborate the IGMP Report messages and thus S5, S6, S7, S8 broadcast the received multicast packets to all the ports; this is shown in Fig.4, wherein S5 forwards the multicast packets not only to S6 and S7, but also to S8 and wherein S7 forwards the multicast packets not only to S11_snoop but also to S12_snoop. The switches of the IGMP snooping area can elaborate the IGMP Report messages and can prune the received multicast packets, but less efficiently because these switches also receive unregistered multicast packets, that is multicast packets addressed to a multicast group identified by an address not stored in the switch; in this case the IGMP snooping switches are configured to broadcast by default the unregistered multicast packets received from one port to all the other ports, thus increasing also in the IGMP snooping area the data traffic (the result is that a destination host receives a multicast packet addressed to another destination host) and overloading processing units of the switches.

A solution to the above problem could be to start from the GARP (Generic Attribute Registration Procotol) Multicast Registration Protocol (GMRP) defined in IEEE 802.1P and IEEE P802.1Q-REV/D2.0 (2/2005), which is a multicast registration protocol (like IGMP) but running over layer-2. A GMRP message is a GARP packet carryed by an Ethernet frame including in the destination address field a reserved value of a multicast MAC address, which is equal to 01:80:C2:00:00:20 (hexadecimal notation). A GARP packet includes:
- a 'Protocol ID' field composed of 2 bytes equal to 0x0001 (hexadecimal notation) for identifying a GARP application;
- one or more 'Message' fields;
- an 'End Mark' field composed of one byte equal to 0x00. Each 'Message' field includes:

- an 'Attribute Type' field composed of one bytes equal to 0x01 for identifying GMRP;
- an 'Attribute List' field.
Each 'Attribute List' field includes one or more 'Attribute' fields, each one including:
- an 'Attribute Length' field composed of one byte;
- an 'Attribute Event' field composed of one byte;
- an 'Attribute Value' field composed of 6 bytes carrying the multicast group MAC address.
The 'Attribute Event' field can be one of the following values: JoinEmpty, JoinIn, LeaveEmpty, LeaveIn, Empty.

In case of activating not only the IGMP snooping functionality at the switches of the IGMP snooping area, but at the switches of the Ethernet sub-network not supporting the IGMP snooping functionality also activating GMRP (that is the "Not IGMP snooping area" now is a "GMRP area"), there is the same problem of not allowing the registration of the multicast group information because the multicast group information is transmitted from the destination hosts through the IGMP Report messages, which are correctly elaborated by the switches in the IGMP snooping area, but they can not be elaborated by the switches (S5, S6, S7, S8) in the GMRP area, wherein the switches could elaborate GMRP messages over the Ethernet layer. Therefore a first solution could be to perform at the destination hosts a conversion of the IGMP multicast group information to a GMRP multicast group information and to transmit from the destination hosts both the IGMP multicast group information over the IP layer and the GMRP multicast group information over the Ethernet layer. According to this solution, the switches of the IGMP snooping area elaborate the IGMP messages and the switches in the GMRP area elaborate the GMRP messages and the multicast traffic is correctly pruned in all the Ethernet network. This solution can be further improved into a second solution, wherein the IGMP snooping functionality is not activated at any switch (also if supported), but wherein the GMRP is activated at all the switches of the Ethernet network; in this case the Ethernet network performs registration of the multicast group information using only GMRP.

The second solution has the advantage of not requiring the activation of the IGMP snooping functionality at any switch (and to reduce the Opex), but both the first and the second solution could be unfeasible; in fact they require modification of the destination hosts and this is not usually possible because a lot of them are already deployed and support only IGMP. Moreover, the Ethernet network is controlled by a network operator while an host is controlled by the customer, which requires a multicast application to the source host through a telecommunication network controlled at least in part by the network operator. The network used to carry the multicast packets must be transparent to the customer, that is the customer must not know that it is a network including not only an IP network but also an Ethernet network and the network operator itself does not want this to be known to the customer.

The problem indicated above for the IGMP Report message also applies to the IGMP Leave message, that is not only for registration to a multicast group, but also for de-registration from the multicast group. Therefore the technical problem to be solved is the transmission in a telecommunication network of information (Report or Leave message) indicating a multicast group from a destination host to a multicast router communicating through messages of a multicast protocol (IGMP) over a layer (IP), wherein the multicast group information crosses a sub-network not supporting the multicast protocol.

### SUMMARY OF THE INVENTION

In view of drawbacks of the known solutions, the main object of the present invention is to provide in a telecommunication network a method for transmission of a multicast group information from a destination network element to a multicast network element according to a multicast protocol over a layer, wherein the multicast group information crosses a sub-network not supporting the multicast protocol. This object is achieved by a method according to claim 1. The basic idea is to transmit over a layer a first information indicating a multicast group from a network element of the multicast group to a multicast network element, to receive and read the first information, to convert the first information to a second information and to transmit towards the multicast network element the second information over another layer.

A further object of the invention is to provide a method to reduce the number of network elements requiring activation of a multicast protocol functionality; this is achieved by a method according to claim 3.

The method can be implemented on a network element according to claim 10. The network element includes receiving means adapted to receive over a layer a first information indicating a multicast group, to read the first information and to convert the first information to a second information; the network element further includes transmitting means adapted to transmit the second information over another layer.

Advantages of the invention are:
- to achieve efficient pruning of multicast data traffic transmitted over a network including an Ethernet sub-network and an IP sub-network;
- not to require modification of the destination hosts;
- to reduce the number of switches requiring activation of the IGMP snooping functionality;
- not to require an opposite conversion from GMRP to IGMP messages.

### BRIEF DESCRIPTION OF THE DRAWINGS

Fig.1 schematically shows transmission of a multicast IP packet crossing an IP network.
Fig.2 schematically shows the problem of transmission of a multicast IP packet crossing a IP network and an Ethernet network.
Fig.3 schematically shows a known solution to the problem of Fig.2.
Fig.4 schematically shows the problem of transmission of a multicast IP packet crossing an IP network and an Ethernet network not supporting the same multicast protocol.
Fig.5 schematically shows a first embodiment of the invention for the solution of the problem of Fig.4.
Fig.6 schematically shows a second embodiment of the invention for the solution of the problem of Fig.4.

### BEST MODE FOR CARRYING OUT THE INVENTION

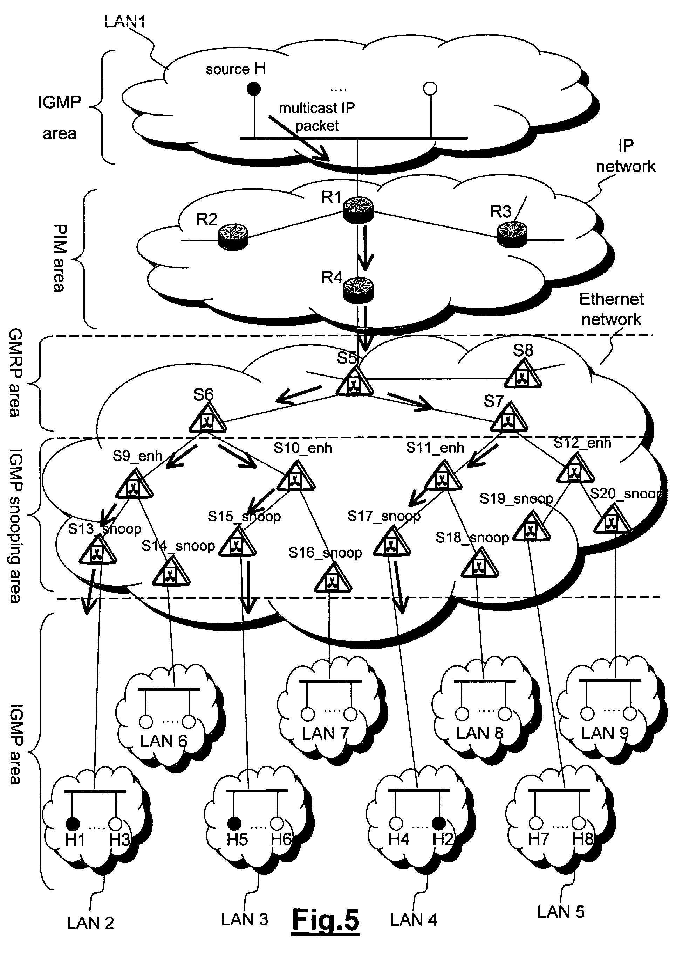

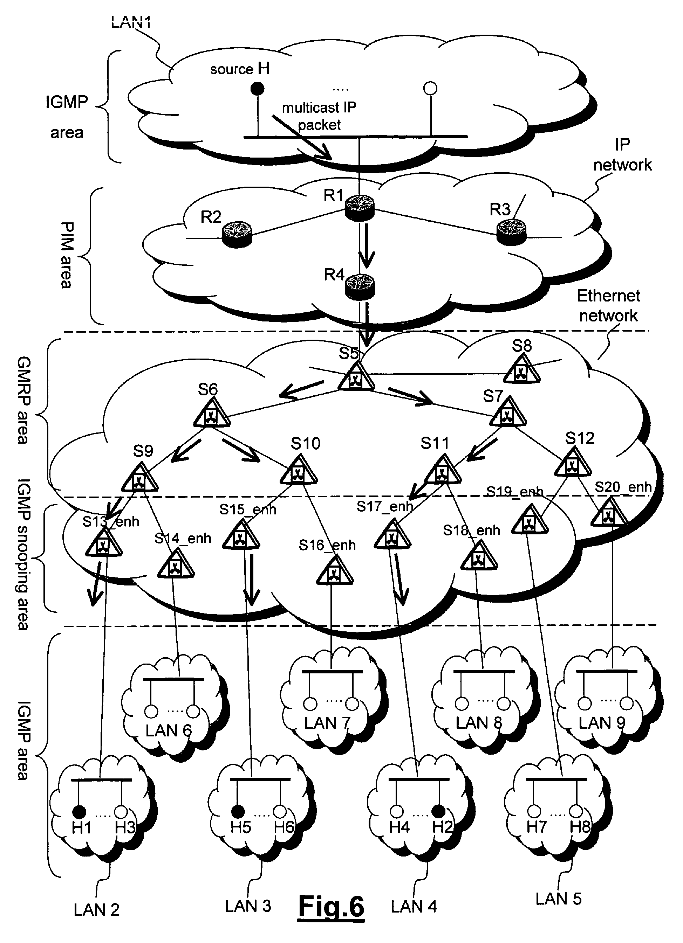

Fig.5 and Fig.6 show a first and a second embodiment of the invention respectively, wherein a part of the Ethernet network does not support the IGMP snooping functionality, but it supports GMRP; this part includes switches S5, S6, S7, S8 and it's indicated with "GMRP area", which corresponds to the "Not IGMP snooping area" of Fig.4. Referring to the first embodiment of Fig.5, the conversion of the multicast group information is performed at the switches connecting the IGMP snooping area to the GMRP area and these switches are indicated with S9_enh, S10_enh, S11_enh, S12_enh, wherein "enh" stands for "enhanced" for indicating that the switch performs the conversion according to the inv+ention. Comparing Fig.5 respect to Fig.4, S9_enh, S10_enh, S11_enh, S12_enh replace S9_snoop, S10_snoop, S11_snoop, S12_snoop respectively. For example, H1 transmits towards R4 an IGMP Report message including a multicast IP address in the Group Address field for indicating to belong to a group; the IGMP Report message is received by S13_snoop, which performs the IGMP snooping functionality, that is reading and storing the multicast IP address carryed by the received IGMP Report message and storing identifier of the port connecting S13_snoop to LAN2. The IGMP Report message is routed from S13_snoop to S9_enh, which receives it and performs both the IGMP snooping functionality (that is reading and storing the multicast IP address carryed by the received Report message and storing identifier of the port connecting S9_enh to S13_snoop) and the conversion of the IGMP multicast group information into GMRP multicast group information. After the conversion, S9_enh transmits to S6 a GMRP message including:
- Attribute Event = JoinIn;
- Attribute Value = the converted GMRP multicast group information.
   S6 supports GMRP and thus it can correctly elaborate the received GMRP message, that is S6 reads and stores the converted GMRP multicast group information carryed by the received GMRP message and it stores identifier of the port connecting S6 to S9_enh; this stored information will be used by S6 for efficiently routing the received Ethernet frame carrying the multicast IP packet transmitted from H and including an IP packet addressed to H1. After elaborating the GMRP message, S6 transmits to S5 the GMRP message carrying the converted GMRP multicast group information: S5 supports GMRP and thus it can correctly elaborate the received GMRP message, that is S5 reads and stores the converted GMRP multicast group information and stores identifier of the port connecting S5 to S6. This stored information will be used by S5 for efficiently routing the received Ethernet frame carrying the multicast IP packet transmitted from H and addressed to H1. After elaborating the GMRP message, S5 transmits to R4 an IP packet including the IGMP multicast group information in the Report message; this IP packet is received by R4, which extracts the IGMP multicast group information and elaborates these information according to the known PIM protocol running among the routers of the IP network.

The same method explained above for the IGMP Report message transmitted by H1 and crossing S13_snoop, S9_enh, S6, S5, also applies to:
- the IGMP Report message transmitted by H5 and crossing S15_snoop, S10_enh, S6 and S5;
- the IGMP Report message transmitted by H2 and crossing S17_snoop, S11_enh, S7 and S5.
   The result of the method explained above is indicated in Fig.5, wherein switches of the GMRP area route the multicast traffic only to ports over the routes towards the destination hosts belonging to the multicast group: S5 routes the multicast traffic to S6 and S7 but not to S8, S6 routes the multicast traffic to S9_enh and S10_enh, S7 routes the multicast traffic to S11_enh but not to S12_enh. The same applies to the switches of the IGMP snooping area: S9_enh routes the multicast traffic to S13_snoop but not to S14_snoop, S10_enh to S15_snoop but not to S16_snoop and S11_enh to S17_snoop but not to S18_snoop.

Referring more specifically to the conversion, the IGMP multicast group information is indicated by a multicast IP address and the GMRP multicast group information is indicated by a multicast MAC address; the multicast MAC address is calculated taking into account the multicast IP address carryed by the received IGMP Report message, by mapping part of the multicast IP address into part of the multicast MAC address. An IP address includes 32 bits, while a MAC address includes 48 bits; the multicast MAC address is composed by "01:00:5E" (hexadecimal notation) followed by the 23 least significant bits (translated into hexadecimal) of the multicast IP address. For example, let's consider a multicast IP address equal to 224.192.0.10; the multicast MAC address includes the 23 least significant bits and thus the first octet (224) is discarded, while only 7 bits of the second octet (192) is taken into account. The binary notation of 192 is "1100 0000", wherein the most significant bit is discarded and becomes "0100 0000" in binary notation and 0x40 in exadecimal notation. The third octet is 0 and corresponds to 0x00; the fourth octet is 10 and corresponds to 0x0A. Thus the multicast MAC address is "01:00:5E:40:00:0A". It must be noticed that there is no one-to-one mapping of a multicast IP address into a multicast MAC address; in fact the variable bits of a class D IP address are 28, but only 23 are mapped into the MAC address. The 5 most significant bits identify 32 different IP address, which are mapped into one MAC address. The first embodiment has the advantage of not requiring the modification of the hosts, but it still has the disadvantage to require the activation of the IGMP snooping functionality at many switches, that is at all the switches (indicated with S13_snoop, S14_snoop... S20_snoop) comprised between the destination hosts and the switches (S9_enh, S10_enh, S11_enh, S12_enh) performing the invention.

Referring to the second embodiment of Fig.6, the disadvantage of the first embodiment is overcome. In fact in the second embodiment the conversion of the multicast group information is performed only at the switches directly connecting the LANs to the Ethernet network and indicated with S13_enh, S14_enh...S20_enh, wherein again "enh" stands for "enhanced" for indicating that the switch performs the conversion according to the invention. Comparing Fig.6 respect to Fig.4, S13_enh, S14_enh...S20_enh replace S13_snoop, S14_snoop...S20_snoop respectively. The multicast group information converted at the switches connected to the hosts is compliant to the GMRP and it is transmitted in the GMRP area over the Ethernet network; therefore the GMRP area shown in Fig.6 is larger than the GMRP area shown in Fig.5. For example, H1 transmits towards R4 an IGMP Report message including a multicast IP address in the Group Address field for indicating to belong to a group; the IGMP Report message is received by S13_enh, which performs both the IGMP snooping functionality (that is reading and storing the multicast IP address carryed by the received Report message and storing identifier of the port connecting S13_enh to LAN2) and the conversion of the IGMP multicast group information into GMRP multicast group information. After the conversion, S13_enh transmits to S9 a GMRP message including:
- Attribute Event = JoinIn;
- Attribute Value = the converted GMRP multicast group information.
   S9 supports GMRP and thus it can correctly elaborate the received GMRP message, that is S9 reads and stores the converted GMRP multicast group information carryed by the received GMRP message and it stores identifier of the port connecting S9 to S13_enh; this stored information will be used by S9 for efficiently routing the received Ethernet frame carrying the multicast IP packet transmitted from H and including an IP packet addressed to H1. After elaborating the GMRP message, S9 transmits to S6 the GMRP message carrying the converted GMRP multicast group information: S6 supports GMRP and thus it can correctly elaborate the received GMRP message, that is S6 reads and stores the converted GMRP multicast group information and stores identifier of the port connecting S6 to S9. This stored information will be used by S6 for efficiently routing the received Ethernet frame carrying the multicast IP packet transmitted from H and addressed to H1. After elaborating the GMRP message, S5 transmits to R4 an IP packet including the IGMP multicast group information in the Report message; this IP packet is received by R4, which extracts the IGMP multicast group information and elaborates these information according to the known PIM protocol running among the routers of the IP network.

The same method explained above for the IGMP Report message transmitted by H1 and crossing S13_enh, S9, S6, S5, also applies to:
- the IGMP Report message transmitted by H5 and crossing S15_enh, S10, S6 and S5;
- the IGMP Report message transmitted by H2 and crossing S17_enh, S11, S7 and S5.
   The result of the method explained above is indicated in Fig.6, wherein switches of the GMRP area route the multicast traffic only to ports over the routes towards the destination hosts belonging to the multicast group: S5 routes the multicast traffic to S6 and S7 but not to S8, S6 routes the multicast traffic to S9 and S10, S7 routes the multicast traffic to S11 but not to S12.

The specific solution of the conversion also applies to the second embodiment.

The advantages of the second embodiment are:
- not to require the modification of the hosts;
- to require activation of the IGMP snooping functionality at a less number of switches, that is only at the switches connecting the LANs to the Ethernet network;
- to use a multicast protocol (GMRP) which is simple, already standardized, supported by many vendors and active by default, instead of using an optional functionality (IGMP snooping) which is more complex, not standardized, not supported by all vendors and requiring activation.
A further advantage of both the first and the second embodiments is not to require an opposite conversion at the switch (indicated with S5 in Fig.5 and Fig.6) connecting the Ethernet to the IP network, that is a conversion from GRMP multicast group information to IGMP multicast group information. In fact the destination hosts are not modified and they transmits towards R4 IGMP messages carrying the IGMP multicast group information over the IP layer; therefore the multicast router R4 always receives from switch S5 the IGMP messages transmitted from the destination hosts over the IP layer. Although the opposite conversion is useless for the solution of the technical problem indicated above, it could be useful for the solution of other technical problems, for example for checking if the received IGMP multicast group information is affected by errors, by comparing it respect to the IGMP multicast group information converted from the received GMRP multicast group information.
The conversion can be used not only for the IGMP Report message, but also for the IGMP Leave message transmitted from a destination host for indicating to leave a specific multicast group. In fact, the Leave message includes the 'Group Address' field, which carries the multicast IP address indicating the multicast group to leave; this multicast IP address is converted into a multicast MAC address like indicated above. The converted multicast MAC address is assigned to the 'Attribute Value' of the GMRP message, while the 'Attribute Event' is assigned to LeaveIn.

The invention can be used not only for transmission of multicast group information from destination hosts to a multicast router according to IGMP, but also according to different multicast protocols, like for example MLD. In fact IGMP is used in case of an IP network compliant to IP version 4 (IPv4), while MLD is used for an IP network compliant to IP version 6 (IPv6). A possible scenario is evolution of the routers of the IP network from IPv4 to IPv6 and corresponding evolution of the destination hosts from IGMP to MLD for transmission of the multicast group information. The IGMP snooping area is replaced by an "MLD snooping area", including Ethernet switches performing snooping of the MLD messages, that is an MLD snooping switch can read MLD messages transmitted from destination hosts to router R4 connecting the IP network to the Ethernet network. Therefore at the Ethernet switches the following upgrade is required:
- update of the configuration for supporting the MLD snooping functionality;
- de-activate the IGMP snooping functionality;
- activate the MLD snooping functionality;
- activating the conversion according to the invention at a sub-set of the switches.
   The second embodiment has the further advantage to minimize the number of switches requiring the above upgrade, because this must be performed only at the switches connecting the LAN to the Ethernet network (S13_enh...S2_enh in Fig.6), while the other switches (SS...S12) don't require any upgrade, because they receive the multicast group information according to GMRP messages.

The method can be implemented on a network element, which can be a layer-two switch or it can be a multiservice node supporting different layers. The method can be implemented on the network element through a software program or through hardware means or through a combination of hardware means adapted to run a software program. The software program is written in a programming language, like for example C. The hardware means can be a microprocessor running the software program; the microprocessor can be external or embedded into an Application Specific Integrated Circuit (ASIC) or into a Field Programmable Gate Array (FPGA). More specifically, an IGMP message is carryed over the IP layer: therefore the reading of the IGMP message and the conversion to GMRP message is performed through a software program running on a microprocessor, which can be part of the hardware means receiving the IGMP message or it can be a different hardware block. A GMRP message is carryed over the Logical Link Control sub-layer of the Ethernet layer and thus the reading of the GMRP message is performed through a software program running on a microprocessor; anyway, an hardware implementation through an integrated circuit (for example, an ASIC or a FPGA) is possible.

## Claims

1. Method for transmitting (IGMP area) a first information indicating a multicast group from a network element (H1) of the multicast group to a multicast network element (R4), the method including the following steps:
- transmitting (IGMP area) the first information over a layer from the network element towards the multicast network element;
- receiving and reading (IGMP snooping area) the first information;
**characterized by** further including the following steps:
- converting (S9_enh, S13_enh) the first information to a second information;
- transmitting (GMRP area) towards the multicast network element the second information over another layer.

2. Method according to claim 1, wherein the first information is transmitted from the network element of a first sub-network (LAN2) supporting the layer and it's received by a network element (S9_enh, S13_enh) of a second sub-network (Ethernet network) supporting the other layer, **characterized in that** the receiving, the reading, the converting and the transmitting are performed by the network element (S9_enh, S13_enh) of the second sub-network.

3. Method according to claim 2, **characterized in that** the network element (S13_enh) of the second sub-network directly connects the second sub-network to the first sub-network.

4. Method according to any of the previous claims, further including the following steps:
- receiving (S6) the second information over the other layer;
- reading the second information;
- transmitting the second information over the other layer.

5. Method according to claim 4, further including the following steps:
- receiving (S5) the second information over the other layer;
- reading the second information;
- transmitting to the multicast network element (R4) the first information over the layer.

6. Method according to any of the previous claims, wherein the layer is Internet Protocol and the other layer is Ethernet, **characterized in that** the first information indicates a multicast Internet Protocol address and the second information indicates a multicast Ethernet address.

7. Method according to claim 6, **characterized by** mapping a part of the Internet Protocol address into a part of the Ethernet address.

8. Method according to any of the previous claims, **characterized in that** the first information is transmitted according to Internet Group Management Protocol (IGMP area).

9. Method according to any of the previous claims, **characterized in that** the second information is transmitted according to GARP Multicast Registration Protocol (GMRP area).

10. Network element (S9_enh, S13_enh) including receiving means adapted to:
- receive (IGMP snooping area) over a layer a first information indicating a multicast group;
- read the first information;
**characterized in that** the receiving means are further adapted to convert the first information to a second information; and
**characterized in that** the network element further includes transmitting means adapted to transmit (GMRP area) the second information over another layer.

11. Network element (S9_enh) according to claim 10, wherein the network element belongs to a second sub-network supporting the other layer and connected to a first sub-network supporting the layer.

12. Network element (S13_enh) according to claim 11, wherein the network element (S13_enh) directly connects the first sub-network to the second sub-network.
